# EUROPEAN PATENT SPECIFICATION

(11) **EP 4 324 862 B1**
(45) Date of publication and mention of the grant of the patent: **24.06.2026**
(21) Application number: 22787947.5
(22) Date of filing: 22.03.2022
(51) Int. Cl.: C08F 290/06

(54) **METHOD FOR PRODUCING SILICONE PARTICLES**
VERFAHREN ZUR HERSTELLUNG VON SILIKONPARTIKELN
PROCÉDÉ DE PRODUCTION DE PARTICULES DE SILICONE

(30) Priority: 13.04.2021 JP 2021067595
(43) Date of publication of application: 21.02.2024
(73) Proprietor: SHIN-ETSU CHEMICAL CO., LTD., Tokyo 1000005 (JP)
(72) Inventor: TAKEWAKI, Kazuyuki, Annaka-shi, Gunma 379-0224 (JP)
(74) Representative: Sonnenhauser, Thomas Martin
(86) International application number: PCT/JP2022/013059
(87) International publication number: WO 2022/220022

(56) References cited:
- WO-A1-2015/128636
- WO-A1-2018/190158
- WO-A1-2019/026651
- JP-A- 2017 105 753
- JP-A- 2019 026 606
- JP-A- 2019 510 258
- JP-A- 2021 105 100
- JP-A- H0 625 369
- US-B2- 9 574 038

## Description

### TECHNICAL FIELD

The present invention relates to a method for producing a hydrophilic silicone particle.

### BACKGROUND ART

Patent Document 1 proposes a crosslinked silicone particle. Furthermore, Patent Document 2 proposes adding this silicone particle to an aqueous coating composition in order to provide a coating film with delustering properties. In addition, Patent Document 3 and Patent Document 4 propose adding the silicone particle to an aqueous cosmetic in order to improve the feeling on use of the cosmetic.

When used as cosmetic, conventional silicone particles are used for the purpose of imparting dry or smooth feeling on use, etc., spreadability, soft focus effect, and so forth. However, silicone is a material having high water repellency, and there is a problem that it is difficult to disperse silicone in an aqueous cosmetic.

When any of the above-described silicone particles are used to obtain an aqueous suspension in which water is a dispersion medium, a nonionic surfactant, an anionic surfactant, a cationic surfactant, an amphoteric surfactant, or a surfactant produced from a mixture of these surfactants is used for stabilizing the suspension.

Particularly, for use in cosmetics, it is necessary to select a surfactant that has little effect on the environment while improving the stability of these suspensions and emulsions themselves and improving dispersibility in a composition. Alkyl polyether having an alkyl group having 12 to 15 carbon atoms is considered to be a chemical substance whose effect on the environment raises concerns, and is a designated chemical substance of the PRTR (Pollutant Release and Transfer Register). The reporting of the discharged amount, etc. of such alkyl polyether is made compulsory in accordance with the PRTR, and use of the alkyl polyether is becoming restricted.

In addition, since surfactant raises concerns of irritation to skin, use of a surfactant is sometimes avoided in cosmetics that are externally applied to skin, in particular, skin care cosmetics, make-up cosmetics, antiperspirant cosmetics, UV care cosmetics, etc.

As a means for avoiding such use of a surfactant, Patent Document 5 proposes a surfactant-free aqueous dispersion of silicone particles. However, the surface treatment process after producing the silicone particles is complicated, and high costs are involved, so that there has been a problem that the dispersion can only be used for some high-cost uses.

As an example of introducing a hydrophilic group to the surface of a silicone particle in the manner of a chemical bond, Patent Document 6 considers the introduction of an amino group to the surface of a silicone particle. However, the water dispersibility and stability of the silicone particles are not reported.

A common method for producing a silicone particle is to cure a reactive organopolysiloxane in an oil-in-water typed emulsion (O/W type) dispersed in water under the existence of a surfactant. Surfactant to be used include, a nonionic surfactant, an anionic surfactant, a cationic surfactant, an amphoteric surfactant, and so force, but in general a nonionic surfactant is used because of its high emulcifying capacity of organopolysiloxane, stability of obtained emulsion, wide variety, and availability.

A nonionic surfactant has a polyoxyethylene group as a hydrophilic group, and in an oil-in-water typed emulsion, a polyoxyethylene group orients outside efficiently and connects with a water molecule by hydrogen-bonding, and exhibits an emulcifying capacity by dissolution and dispersion. However, it is known that when the temperature of an emulsion increases, the strength of hydrogen-bonding between a polyoxyethylene group and a water molecule becomes weak, and nonionic surfactant cannot be solved nor dispersed in a water, and consequently an emulcifying capacity is decreased. This temperature is referred as a cloud point, it is known that an emulsion loses its stability and demulsified when higher than its cloud point.

In cases that an organopolysiloxane having a radical polymerization reactive group such as a vinyl group, an acryl group, or a methacryl group as a reactive group to produce a silicone particle is used for a raw material, in many cases, a radical polymerization initiator such as an organic peroxide is used as a catalyst, and polymerization where a radical generated by a decomposition by heating works as an active species is used. However, when a cloud point of surfactant is low, or when a stability of emulsion of a reactive organopolysiloxane is poor, there is a problem that heating cannot reach the decomposition temperature of the radical polymerization initiator.

In a such case, a photo-radical polymerization initiator which can generate a radical by UV radiation even in a lower temperature is sometimes used, but a production facility for it is not common yet. Additionally, there is a problem that the polymerized is attached on the surface of ultraviolet irradiation device and decreases a reaction efficiency when an ultraviolet irradiation device contacts directly with a reactive organopolysiloxane.

US9574038 B2 discloses polysiloxane macromers comprising (meth)acryl terminal groups and a polyoxyalkylene side chain. Their copolymerization with HEMA and other monomers, rather than with macromers, is further described.

### CITATION LIST

### PATENT LITERATURE

Patent Document 1: JP H11-140191 A
Patent Document 2: JP H05-009409 A
Patent Document 3: JP H10-139624 A
Patent Document 4: JP H10-175816 A
Patent Document 5: JP 2016-505081 A
Patent Document 6: JP 2008-285552

### SUMMARY OF INVENTION

### TECHNICAL PROBLEM

The present invention has been made in view of the above-described problems. An object of the present invention is to provide a method for producing a silicone particle having a hydrophilic group, which can be readily dispersed in an aqueous material without the use of a dispersant or a surfactant.

### SOLUTION TO PROBLEM

To achieve the above object, the present invention provides a method for producing a silicone particle, the silicone particle including:
a dialkylsiloxane unit represented by the following general formula (1),

   R⁴₂SiO_{2/2} (1)

   wherein in the formula (1), R⁴s each independently represent a monovalent hydrocarbon group having 1 to 6 carbon atoms; and
a poly(oxyalkylene)methylsiloxane unit represented by the following general formula (2), 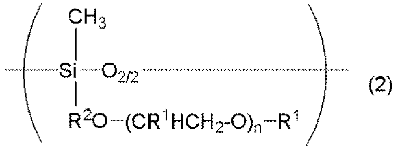 wherein in the formula (2), R¹s each independently represent a hydrogen atom or a monovalent hydrocarbon group having 1 to 6 carbon atoms, R²s each independently represent a divalent aliphatic group having 1 to 6 carbon atoms, and "n" is a number that satisfies 1 ≤ n ≤ 50,
wherein the silicone particle has an oxyalkylene group in a surface thereof, the method including: polymerizing a radical polymerizable silicone composition containing the following components (A) to (C) in a state of being dispersed in water at a low temperature of 50°C or less:
   (A) an organopolysiloxane having a radical polymerization reactive group shown in the following general formula (3): 100 parts by mass, 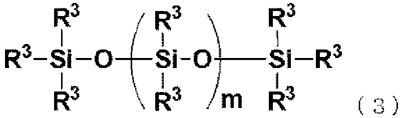 wherein in the formula (3), R³s each independently represent a monovalent hydrocarbon group having 1 to 6 carbon atoms or a group shown in the following general formula (4a) or (4b), provided that at least one group shown in the following formula (4a) or (4b) is contained in one molecule, and "m" is a number that satisfies 0 ≤ m ≤ 1,000, 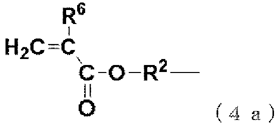 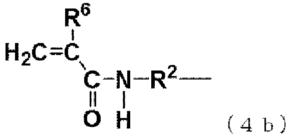 wherein in the formulae (4a) and (4b), R⁶ represents a hydrogen atom or a methyl group and R² represents a divalent aliphatic group having 1 to 6 carbon atoms;
   (B) a polyoxyalkylene-modified silicone having a radical polymerizable group shown in the following general formula (5): 0.1 to 100 parts by mass, 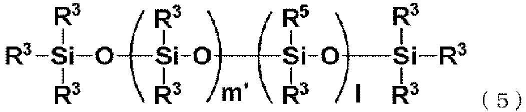 wherein in the formula (5), R³ is as defined above and at least one group shown in the following formula (4a) or (4b) are contained in one molecule, R⁵ represents a polyoxyalkylene group represented by the following general formula (7), "l" is a number that satisfies 1 ≤ l ≤ 300, and "m'" is a number that satisfies 1 ≤ m' ≤ 1,000, 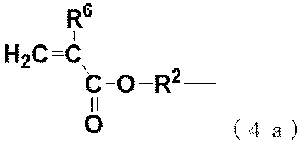 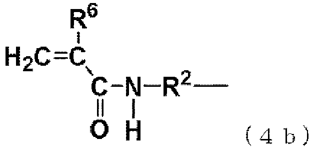 wherein in the formulae (4a) and (4b), R⁶ and R² are as defined above,

      -R²O(CR¹HCH₂O)n-R¹ (7)

      wherein in the formula (7), R¹, R², and "n" are as defined above; and
   (C) a redox radical polymerization initiator: 0.1 to 5 parts by mass.

In this way, even when a cloud point of a surfactant is low or when an emulsion of a reactive organopolysiloxane has poor stability, without using a dispersant or a surfactant for an aqueous material, it becomes possible to produce easily a silicone particle having a hydrophilic group which can easily disperse.

Furthermore, as the component (A), it is preferable to use an organopolysiloxane having a radical polymerization reactive group shown in the following general formula (8). 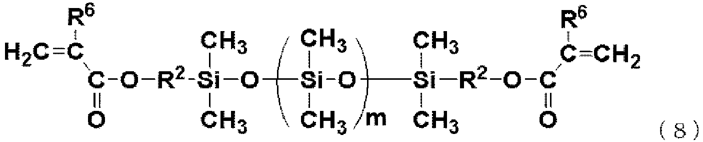 wherein in the formula (8), R² and R⁶ are as defined above, and "m" is a number that satisfies 0 ≤ m ≤ 1,000.

In the present invention, such a component (A) can be preferably used.

Furthermore, as the component (B), it is preferable to use a polyoxyalkylene-modified silicone having a radical polymerizable group shown in the following general formula (9). 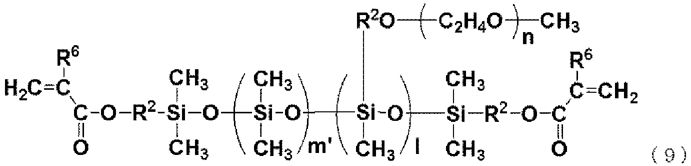 wherein in the formula (9), R² and R⁶ are as defined above, "l" is a number that satisfies 1 ≤ l ≤ 300, "m'" is a number that satisfies 1 ≤ m' ≤ 1,000, and "n" is a number that satisfies 1 ≤ n ≤ 50.

In the present invention, such a component (B) can be preferably used.

Furthermore, the silicone particle preferably has a volume average particle size of 0.1 to 100 µm.

When the silicone particle produced by the method of the present invention has such a volume average particle size, dispersibility in an aqueous material can be made favorable.

### ADVANTAGEOUS EFFECTS OF INVENTION

With use of the method for producing a silicone particle of the present invention, even when a cloud point of a surfactant is low or when an emulsion of a reactive organopolysiloxane has poor stability, without using a dispersant or a surfactant for an aqueous material, it is possible to produce easily a silicone particle having a hydrophilic group which can easily disperse. Furthermore, because a silicone particle produced by the method for producing a silicone particle of the present invention has an oxyalkylene group (a hydrophilic group) in the surface, the silicone particle can be readily dispersed in an aqueous material without use of a dispersant, typically, a surfactant. For example, for use in aqueous cosmetics that are externally applied to skin, such as skin care cosmetics, make-up cosmetics, antiperspirant cosmetics, and UV care cosmetics, there is no need to use a surfactant specially for blending the silicone particle. Therefore, it is possible to obtain a product which raises no concern about skin irritation. Moreover, in aqueous paints and inks, it is unnecessary to add further surfactant for dispersing the silicone particles thereinto, thereby solving the problems of coating film strength being degraded and bubbles not easily disappearing.

### DESCRIPTION OF EMBODIMENTS

As described above, an object of the present invention is to provide a method for producing a silicone particle having a hydrophilic group that can be readily dispersed in an aqueous material without additional use of a dispersant or a surfactant.

To achieve the object, the present inventor has earnestly studied and found out that it is possible to obtain a silicone particle having a hydrophilic group in a surface thereof and make the silicone particle dispersed readily in water by the following means: preparing an emulsion by emulsifying an organopolysiloxane having a radical polymerization reactive group while using a polyoxyalkylene-modified silicone having a radical polymerizable group as an emulsifier; and subjecting the emulsion to emulsion polymerization and crosslinking using a redox radical polymerization initiator at a low temperature of 50°C or less.

That is, the present invention relates to a method for producing a silicone particle including a dialkylsiloxane unit represented by the above general formula (1) and a poly(oxyalkylene)methylsiloxane unit represented by the above general formula (2), and having an oxyalkylene group in a surface thereof, wherein a radical polymerizable silicone composition containing the above components (A) to (C) are polymerized in a state of being dispersed in water at a low temperature of 50°C or less.

Hereinafter, embodiments of the present invention will be described, but the present invention is not limited thereto.

### [Silicone Particle]

Firstly, the silicone particle produced by a method for producing a silicone particle of the present invention will be described in detail.

The silicone particle contains:
a dialkylsiloxane unit represented by the following general formula (1),

   R⁴₂SiO_{2/2} (1)

   wherein in the formula (1), R⁴s each independently represent a monovalent hydrocarbon group having 1 to 6 carbon atoms; and
a poly(oxyalkylene)methylsiloxane unit represented by the following general formula (2), 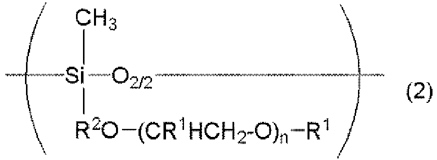 where, in the formula (2), R¹s each independently represent a hydrogen atom or a monovalent hydrocarbon group having 1 to 6 carbon atoms, R²s each independently represent a divalent aliphatic group having 1 to 6 carbon atoms, and "n" is a number that satisfies 1 ≤ n ≤ 50, wherein the silicone particle has an oxyalkylene group in a surface thereof.

As described above, in the general formula (1), R⁴s each independently represent a monovalent hydrocarbon group having 1 to 6 carbon atoms. Specific examples of R⁴ include alkyl groups such as a methyl group, an ethyl group, a propyl group, a butyl group, a pentyl group, and a hexyl group; cycloalkyl groups such as a cyclopentyl group and a cyclohexyl group; and aryl groups such as a phenyl group. A methyl group and a phenyl group are preferable.

Meanwhile, in the general formula (2), as described above, R¹s each independently represent a hydrogen atom or a monovalent hydrocarbon group having 1 to 6 carbon atoms. Specific examples of the monovalent hydrocarbon group having 1 to 6 carbon atoms of R¹ include a methyl group, an ethyl group, a propyl group, a butyl group, a pentyl group, and a hexyl group, and R¹ is preferably a hydrogen atom or a methyl group. In addition, in the general formula (2), as described above, R²s each independently represent a divalent aliphatic group having 1 to 6 carbon atoms. Specific examples of R² include alkylene groups such as an ethylene group, a methylethylene group, a propylene group, a butylene group, a pentylene group, and a hexylene group, preferably an ethylene group or a propylene group. In addition, in the formula (2), "n" is a number that satisfies 1 ≤ n ≤ 50, preferably 3 ≤ n ≤ 45.

Such a silicone particle can be readily dispersed in an aqueous material without the use of a dispersant or a surfactant. Such a silicone particle has an oxyalkylene group in a surface thereof, and therefore, can be obtained as a hydrophilic silicone particle having good properties. Specifically, the silicone particle has higher hydrophilicity, causes less skin irritation, and is suitable for cosmetics. Furthermore, regarding the formulation composition when using such silicone particles, there are no restrictions to combinations with anionic surfactants, cationic surfactants, and amphoteric surfactants. A silicone particle produced by the present invention can be easily dispersed in an aqueous material without adding a surfactant separately, but, as occasion demands, it is an option to use the silicone particle with a surfactant in combination.

In a production method of a hydrophilic silicone particle of the present invention, component (B) mentioned later acts as a surfactant and monomer, and forms an oil-in-water typed emulsion (O/W type). In the emulsion, a hydrophilic oxyalkylene group in the component (B) orientates to the water side (outer layer side), and the orientation of a hydrophilic oxyalkylene group is kept even after the curing process because a curing reaction proceed in an emulsion, and therefore the silicone particle is considered to have an oxyalkylene group on the surface thereof (outer layer side).

As described above, the silicone particle of the present invention has a polydialkylsiloxane containing a polyoxyalkylene unit crosslinked to the surface. The silicone particle preferably has a volume average particle size of 0.1 to 100 µm, more preferably 0.5 to 40 µm, further preferably 1 to 20 µm, most preferably 1 to 10 µm. When the silicone particle has a volume average particle size of 0.1 µm or more, the silicone particle does not agglomerate too much, so that the silicone particle can be readily dispersed to primary particles in a dispersion medium. Meanwhile, when the silicone particle has a volume average particle size of 100 µm or less, the silicone particle can be used for a wide variety of uses. That is, when the silicone particle has a volume average particle size of 0.1 to 100 µm, dispersibility of the silicone particle is good, so that the silicone particle can be used for various uses such as cosmetics and aqueous paints and inks.

Note that the volume average particle size of the spherical silicone particle is measured by a method appropriately selected from microscopy method, light scattering method, laser diffraction method, liquid sedimentation method, electric resistance method, etc. in accordance with the particle size of the silicone particle. For example, when the particle size is 0.1 µm or more and smaller than 1 µm, the volume average particle size may be measured by a light scattering method, and when within the range of 1 to 100 µm, the volume average particle size may be measured by an electric resistance method. In addition, in the present description, "spherical" indicates not only particles in the shape of true spheres, but also includes deformed ellipsoids having an average "length of major axis/length of minor axis" (aspect ratio) of usually within the range of 1 to 4, preferably 1 to 2, more preferably 1 to 1.6, and further preferably 1 to 1.4. The shapes of the particles can be confirmed by observing the particles with an optical microscope or an electron microscope.

### [Method for Producing Silicone Particle]

Such a silicone particle can be obtained by polymerizing a radical polymerizable silicone composition containing the following components (A) to (C) in a state of being dispersed in water at a low temperature of 50°C or less.
(A) an organopolysiloxane having a radical polymerization reactive group shown in the following general formula (3): 100 parts by mass

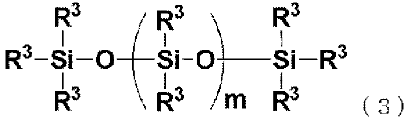

In the formula (3), R³s each independently represent a monovalent hydrocarbon group having 1 to 6 carbon atoms or a group represented by the following general formula (4a) or (4b), provided that at least one group represented by the following formula (4a) or (4b) is contained in one molecule. "m" is a number that satisfies 0 ≤ m ≤ 1,000.

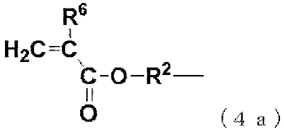

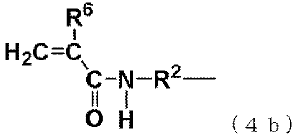

In the formulae (4a) and (4b), R⁶ represents a hydrogen atom or a methyl group, and R² represents a divalent aliphatic group having 1 to 6 carbon atoms. (B) a polyoxyalkylene-modified silicone having a radical polymerizable group shown in the following general formula (5): 0.1 to 100 parts by mass

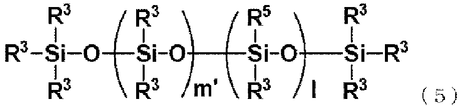

In the formula (5), R³ is as defined above and at least one group represented by the following formula (4a) or (4b) are contained in one molecule. R⁵ represents a polyoxyalkylene group represented by the following formula (7). "l" is a number that satisfies 1 ≤ l ≤ 300 and "m'" is a number that satisfies 1 ≤ m' ≤ 1,000.

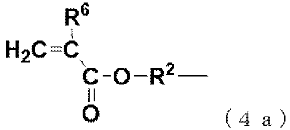

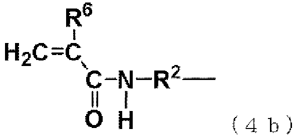

In the formula (4a) and the formula (4b), R⁶ and R² are as defined above.

-R²O(CR¹HCH₂O)n-R¹ (7)

In the formula (7), R¹s each independently represent a hydrogen atom or a monovalent hydrocarbon group having 1 to 6 carbon atoms, and R²s each independently represent a divalent aliphatic group having 1 to 6 carbon atoms. "n" is a number that satisfies 1 ≤ n ≤ 50.
(C) a redox radical polymerization initiator: 0.1 to 5 parts by mass.

Hereinafter, the components (A) to (C) will be described.

### [Component (A)]

Firstly, the component (A) is an organopolysiloxane having a radical polymerization reactive group shown in the following general formula (3).

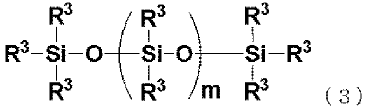

In the formula (3), R³s each independently represent a monovalent hydrocarbon group having 1 to 6 carbon atoms or a group represented by the following general formula (4a) or (4b), provided that at least one group represented by the following formula (4a) or (4b) is contained in one molecule, and "m" is a number that satisfies 0 ≤ m ≤ 1,000.

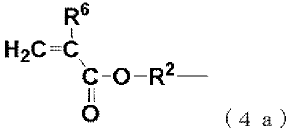

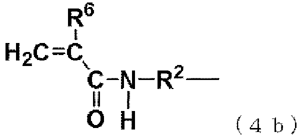

In the formulae (4a) and (4b), R⁶ represents a hydrogen atom or a methyl group, and R² represents a divalent aliphatic group having 1 to 6 carbon atoms.

As described above, R³s in the general formula (3) each independently represent a monovalent hydrocarbon group having 1 to 6 carbon atoms or a group represented by the general formula (4a) or (4b). The monovalent hydrocarbon group may be linear, branched, or cyclic, and examples thereof include alkyl groups such as methyl, ethyl, n-propyl, isopropyl, n-butyl, isobutyl, tert-butyl, n-hexyl, and cyclohexyl; aryl groups such as a phenyl group; etc. Among these monovalent hydrocarbon groups, alkyl groups having 1 to 6 carbon atoms and aryl groups are preferable, and a methyl group, an ethyl group, and a phenyl group are more preferable.

Furthermore, at least one of the R³s in the general formula (3) is a group represented by the formula (4a) or (4b). R⁶ in the formula (4a) or (4b) is a hydrogen atom or a methyl group. In addition, R² in the formula (4a) or (4b) represents a divalent aliphatic group having 1 to 6 carbon atoms, and may be linear, branched, or cyclic. Specific examples thereof include alkylene groups such as a methylene group, an ethylene group, a propylene group, a butylene group, isobutylene, a pentylene group, and a hexylene group. Among these, a methylene group, an ethylene group, and a propylene group are preferable, and a propylene group is more preferable.

In R³, the number of groups represented by the above formula (4a) or (4b) is not particularly limited, provided that at least one is contained, and is preferably 1 to 10, more preferably 1 to 5, further preferably 1 to 3, and most preferably 2.

Furthermore, "m" is a number that satisfies 0 ≤ m ≤ 1,000, preferably 5 ≤ m ≤ 500, more preferably 10 ≤ m ≤ 500, further preferably 10 ≤ m ≤ 300, and most preferably 10 ≤ m ≤ 200. When "m" is more than 1,000, viscosity is too high, so that workability is poor.

The value of "m" can be calculated, for example, as an average value by ²⁹Si-NMR measurement or the like. Alternatively, "m" can be determined from a number-average molecular weight in terms of polystyrene in gel permeation chromatography (GPC) analysis.

As the component (A), it is preferable to use an organopolysiloxane having a radical polymerization reactive group shown in the following general formula (8).

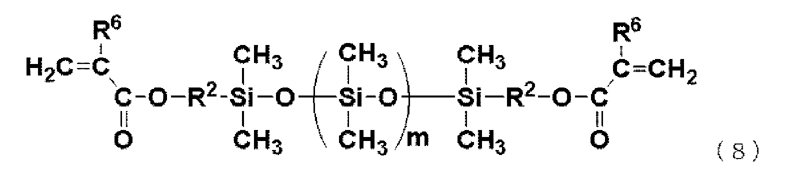

In the formula (8), R² and R⁶ are as defined above, and "m" is a number that satisfies 0 ≤ m ≤ 1,000.

In the formula (8), R², R⁶, and m are the same as explained in the above formula (3), (4a), and (4b).

Examples of the component (A) organopolysiloxane include the compounds of the following formulae.

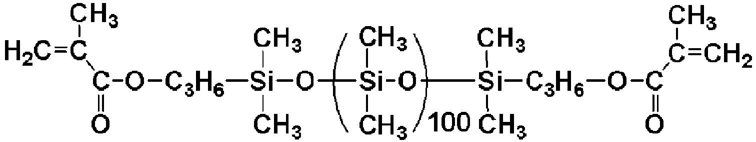

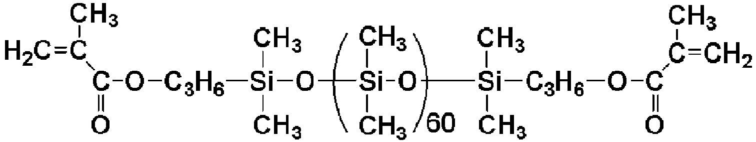

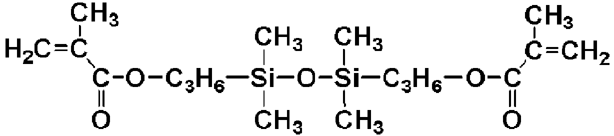

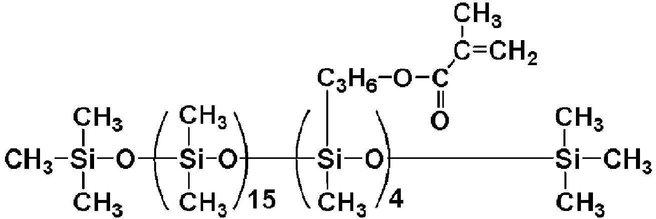

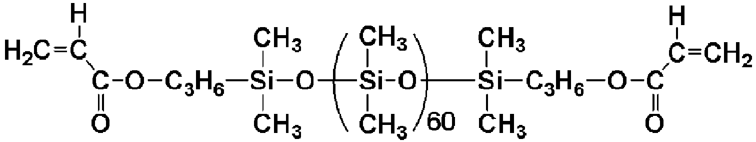

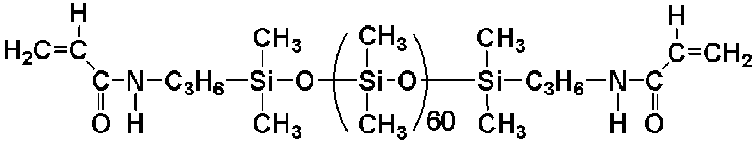

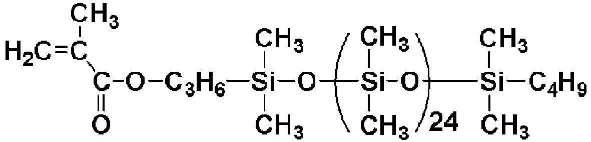

### [Component (B)]

Next, the component (B) is a polyoxyalkylene-modified silicone having a radical polymerizable group shown in the following general formula (5).

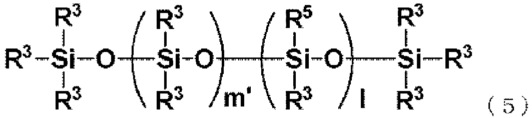

In the formula (5), R³ is as defined above and at least one group represented by the following formula (4a) or (4b) are contained in one molecule. R⁵ represents a polyoxyalkylene group represented by the following formula (7). "l" is a number that satisfies 1 ≤ l ≤ 300 and "m'" is a number that satisfies 1 ≤ m' ≤ 1,000.

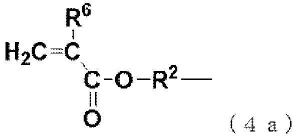

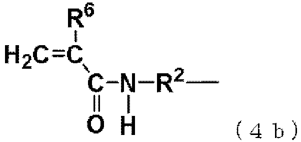

In the formulae (4a) and (4b), R⁶ and R² are as defined above.

-R²O(CR¹HCH₂O)n-R¹ (7)

In the formula (7), R¹s each independently represent a hydrogen atom or a monovalent hydrocarbon group having 1 to 6 carbon atoms, R²s each independently represent a divalent aliphatic group having 1 to 6 carbon atoms, and "n" is a number that satisfies 1 ≤ n ≤ 50.

The component (B) polyoxyalkylene-modified silicone having a radical polymerizable group (radical polymerization reactive group) can emulsify and disperse the component (A) in water, and has a radical polymerizable group. That is, the component (B) can be said to act as a surfactant in the reaction. One kind of the component (B) (surfactant) can be used, or two or more kinds thereof can be used in appropriate combination.

Furthermore, when a polyoxyalkylene-modified silicone having a radical polymerizable group is used as described, the emulsification stability of the emulsion can be improved. In addition, the surfactant to be fixed to the surface of a produced hydrophilic silicone particle can be a nonionic surfactant. In this manner, a hydrophilic silicone particle having favorable properties can be achieved.

In the above formula (5), (4a), and (4b), R², R³, and R⁶ are the same as explained on the component (A). In R³, the number of groups represented by the above formula (4a) or (4b) are not particularly limited, provided that at least one is contained, and is preferably 1 to 10, more preferably 1 to 5, further preferably 1 to 3, and most preferably 2.

In the above formula (7), R¹ and R² are the same as explained on the silicone particle.

"l" is a number that satisfies 1 ≤ l ≤ 300, preferably 1 ≤ l ≤ 100, more preferably 1 ≤ l ≤ 50, further preferably 1 ≤ l ≤ 10, and most preferably 3 ≤ l ≤ 5. When "l" is greater than 300, it become impossible to keep an appropriate balance of hydrophilicity/hydrophobicity for emulsifying the component (A).

"m'" is a number that satisfies 1 ≤ m' ≤ 1,000, preferably 5 ≤ m' ≤ 500, further preferably 10 ≤ m' ≤ 300. When "m'" is greater than 1,000, viscosity is too high, so that workability is poor.

"n" is a number that satisfies 1 ≤ n ≤ 50, preferably 2 ≤ n ≤ 48, more preferably 2 ≤ n ≤ 46, and further preferably 3 ≤ n ≤ 45. When "n" is greater than 50, it become impossible to keep an appropriate balance of hydrophilicity/hydrophobicity for emulsifying the component (A), and it is not liquid at a normal temperature and its workability is poor.

As the component (B), it is preferable to use a polyoxyalkylene-modified silicone having a radical polymerizable group shown in the following general formula (9).

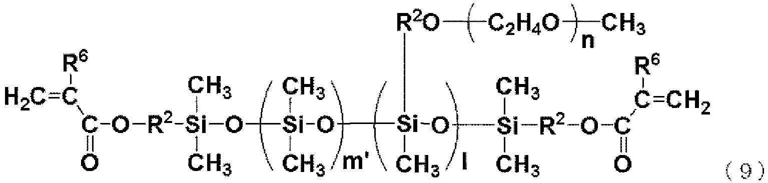

In the formula (9), R² and R⁶ are as defined above, "l" is a number that satisfies 1 ≤ l ≤ 300, "m'" is a number that satisfies 1 ≤ m' ≤ 1,000, and "n" is a number that satisfies 1 ≤ n ≤ 50.

In the above formulae (9), R², R⁶, l, m', and n are the same as explained in the above formulae (5), (4a), and (4b).

Examples of the component (B) polyoxyalkylene-modified silicone include the compounds of the following formulae.

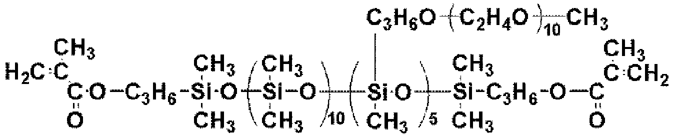

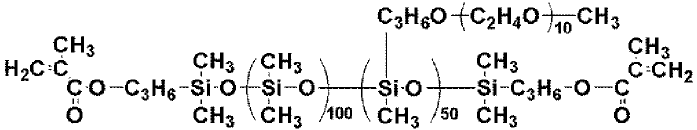

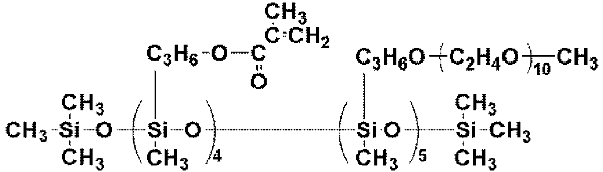

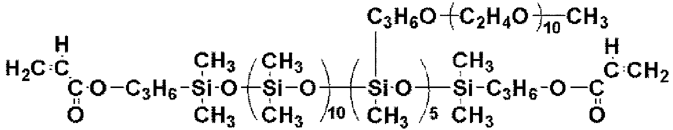

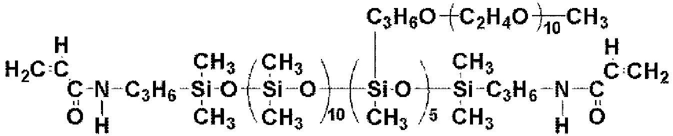

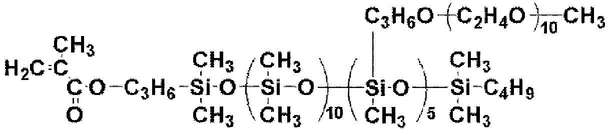

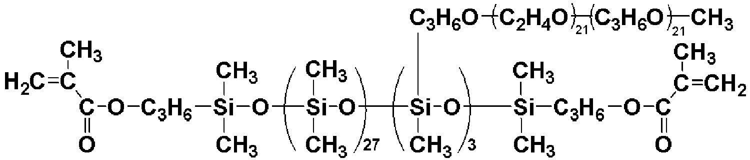

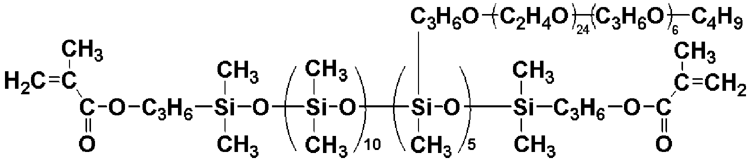

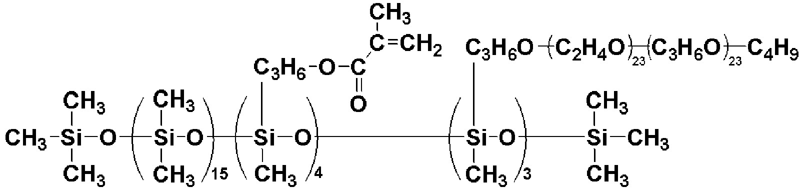

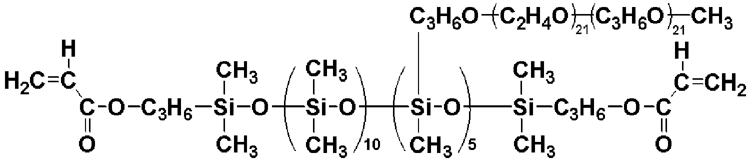

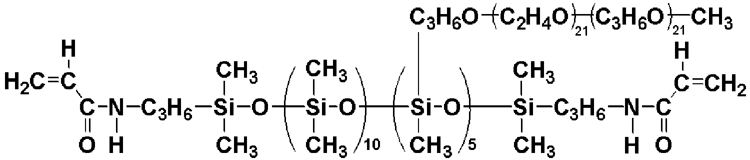

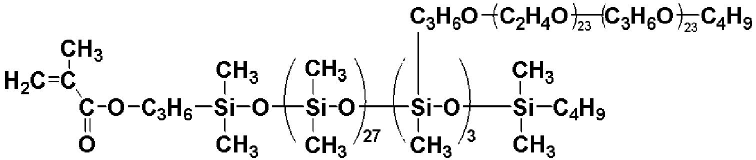

In the above formulae, (C₃H₆O) represents (CH(CH₃)CH₂O).

The component (B) is contained in an amount within a range of 0.1 to 100 parts by mass, preferably 5 to 15 parts by mass based on 100 parts by mass of the component (A). This is because if the contained amount of the component (B) is less than 0.1 parts by mass, the dispersibility of the obtained crosslinked silicone particle in water is decreased, and on the other hand, if the contained amount is more than 100 parts by mass, the obtained silicone particle becomes too small.

### [(C) redox radical polymerization initiator]

The component (C) a redox radical polymerization initiator is consisted of a combination of a radical polymerization initiator and a reducing agent. In general, polymerization can be initiated solely by a radical polymerization initiator, but in case that the component (B) has a low cloud point or in case that the stability of an emulsion comprised of the component (A) and the component (B) is poor, in order to be polymerized at low temperature, the method for producing a silicone particle of the present invention makes a composition cured using a redox radical polymerization initiator combining a radical polymerization initiator and a reducing agent.

Examples of the radical polymerization initiator include ammonium persulfate, potassium persulfate, hydrogen peroxide solution, t-butyl peroxide, benzoyl peroxide, cumene hydroperoxide, diisopropylbenzene hydroperoxide, p-menthane hydroperoxide, 1,1,3,3-tetramethylbutyl hydroperoxide, lauryl peroxide, 2,2'-azobis(isobutyronitrile), 2,2'-azobis(2,4-dimethylvaleronitrile), dimethyl 2,2'-azobis(2-methylpropionate), dimethyl 2,2'-azobis(isobutyrate), and diisopropyl peroxycarbonate. However, in light of being dispersed easily in components (A) and (B), cumene hydroperoxide, benzoyl peroxide, diisopropylbenzene hydroperoxide, p-menthane hydroperoxide, 1,1,3,3-tetramethylbutyl hydroperoxide are preferable.

The reducing agent to be combined with the above radical polymerization initiator is not particularly limited, but it is known that ferrous sulfate is used for a variety of hydroperoxide initiators and that N,N-dimethylaniline is used in combination with benzoyl peroxide.

The amount of the component (C) added is within the range of 0.1 to 5 parts by mass, preferably 0.2 to 3 parts by mass, based on 100 parts by mass of (A). If the added amount is less than 0.1 parts by mass, curability is insufficient, and if the component (C) is added in an amount of more than 5 parts by mass, there are problems such as: the emulsion has poor stability during polymerization; and the reaction residue thereof is mixed (contamination) to cause the silicone particle to have odor and deteriorated properties.

In the method for producing a silicone particle of the present invention, an aqueous dispersion containing the components (A) to (C) may be prepared, and then a radical polymerization reaction may be performed. Alternatively, an aqueous dispersion containing the components (A) and (B), and the radical polymerization initiator of the component (C) may be prepared, and then the reducing agent may be added to perform radical polymerization. Furthermore, an aqueous dispersion containing the components (A) and (B) may be prepared and then the component (C) may be added to perform radical polymerization.

As a dispersion medium, the water is preferably added in an amount of 20 to 1500 parts by mass based on 100 parts by mass of the component (A).

### [Other Additives]

To the emulsion used in the method for producing a silicone particle of the present invention, various additives can be blended as necessary besides the components (A) to (C). Examples include thickeners, preservatives, pH adjusting agents, antioxidants, polymerization inhibitors, etc., and regarding each of these, one kind may be used, or an appropriate combination of two or more kinds may be used in appropriate amounts.

For dispersing the radical polymerizable silicone composition containing the components (A) to (C) in water homogeneously, a common emulsifying and dispersing apparatus can be used. Examples of the emulsifying apparatuses include a homomixer, a paddle mixer, a Henschel mixer, a homogenizing disper, a colloid mill, a propeller-type agitator, a homogenizer, an in-line-type continuous emulsifier, an ultrasonic emulsifier, a vacuum-type kneader, etc.

The emulsion obtained in this manner is subjected to radical polymerization to prepare a dispersion of the silicone particle. The temperature for polymerization is not particularly limited, provided it is 50°C or less, but it may be 0 to 50°C, preferably 10 to 40°C, further preferably 20 to 30°C.

Subsequently, by removing water, unreacted component (B), the reaction residue of the component (C), and so forth from this dispersion or slurry, the silicone particle can be obtained.

Examples of methods for removing water, the unreacted component (B), the reaction residue of the component (C) and so forth include: a method of concentrating the dispersion by a method such as dehydration by heat, filtration, centrifugation, decantation, etc., then washing with water if necessary, and furthermore, heating and drying under normal pressure or reduced pressure; a method of performing heating and drying by spraying the dispersion in a flow of hot air; and a method of performing heating and drying by using a flowing heating medium. In addition, methods for removing the dispersion medium by solidifying the dispersion and then reducing pressure include freeze-drying. If the crosslinked silicone particles obtained by removing the dispersion medium is agglomerated, the particles may be pulverized with a mortar, a jet mill, or the like.

Furthermore, the silicone particle produced by the method for producing a silicone particle of the present invention has a polyoxyalkylene group fixed to the particle surface by a chemical bond produced by radical polymerization. In addition, a polyoxyalkylene-modified silicone is used as the raw material component (B), so that the silicone particle contains a polyoxyalkylene group in the particle surface. Such polyoxyalkylene groups fixed to the surface of the particle can be observed by NMR analysis with heavy water.

The silicone particle produced by the production method of the present invention is preferably not sticky, and preferably has a rubber hardness of 5 to 90, more preferably 10 to 60 as measured by Type A Durometer according to JIS K 6253. When the rubber hardness is 5 or more, in particular, 10 or more, agglomeration property of such a silicone particle does not become too high, so that the particle easily disperses to primary particles in the dispersion medium. Meanwhile, when the rubber hardness is 90 or less, in particular, 60 or less, the silicone particle can retain elastic characteristics.

The silicone particle produced by the production method of the present invention has rubber elasticity, has low agglomeration property, and has high dispersibility in water, and is therefore useful for aqueous cosmetics, aqueous paints, printed substrates, adhesives, etc.

### EXAMPLE

Hereinafter, the present invention will be described specifically with reference to Examples and Comparative Examples. However, the present invention is not limited to the following Examples. Note that in the examples, the kinematic viscosity is the value measured by an Ostwald viscometer at 25°C, and the "%" indicating concentration and content ratio indicates "mass%". In addition, the evaluation of dispersibility was performed in the manner described in each Example.

### [Example 1]

150 g of a difunctional methacryl polysiloxane (component (A)) shown by the following formula (10) and having a kinematic viscosity of 180 mm²/s and 0.33 g of cumene hydroperoxide (PERCUMYL H manufactured by NOF CORPORATION) (component (C), a radical polymerization initiator) were charged into a glass beaker having a capacity of 0.5 liters, and were stirred and dissolved by using a homomixer at 4000 rpm for 5 minutes. Next, 15 g of a difunctional methacryl polyethylene glycol-modified polysiloxane (component (B)) shown by the following formula (11) and having a kinematic viscosity of 160 mm²/s and a cloud point of 65°C in 1% solution and 30 g of water were added thereto, and stirred using a homomixer at 7000 rpm. The obtained mixture was of an oil-in-water type, thickening was observed, and stirring was continued for further 15 minutes. Subsequently, 105 g of water was added for dilution while stirring at 2000 rpm. The mixture was passed through a homogenizer under the condition of a pressure of 100 MPa to obtain a homogeneous white emulsion.

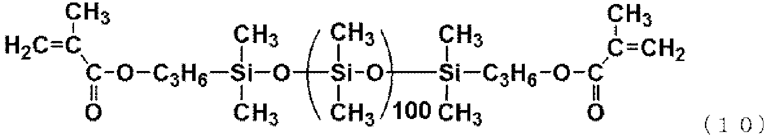

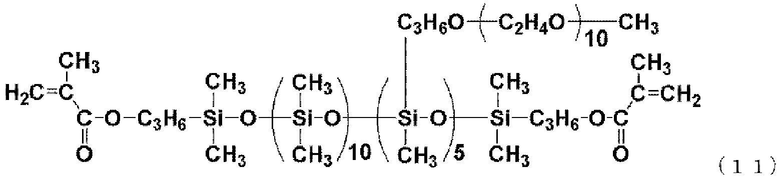

The temperature of this emulsion was adjusted to 20 to 25°C in a glass flask equipped with an agitator having an anchor paddle and having a capacity of 0.5 liters. Then, 0.012 g of ferrous sulfate heptahydrate (component (C), a reducing agent) and 0.12 g of ascorbic acid were added. By continuing stirring the emulsion at the same temperature for 8 hours, an aqueous dispersion of a silicone particle was obtained.

When the shape of the silicone particle in the obtained aqueous dispersion was observed with an optical microscope, the shape was spherical. When the volume average particle size was measured using an electric resistance method particle size distribution analyzer (Multisizer 3, manufactured by BECKMAN COULTER), the volume average particle size was 2.6 µm.

About 300 g of the aqueous dispersion of a silicone particle was transferred to a 2-liter glass flask equipped with an agitator having an anchor paddle, and an aqueous solution of 950 g of water and 50 g of sodium sulfate was added thereto. After stirring for 30 minutes, the washing water of the lower layer was removed. An aqueous solution of 950 g of water and 50 g of sodium sulfate was added again, and after stirring for 30 minutes, the washing water of the lower layer was removed to obtain the aqueous dispersion of a silicone particle. Furthermore, the aqueous dispersion was washed twice with 1000 g of heated water at 70°C, and the approximately 15% aqueous dispersion of a silicone particle was obtained and then freeze-dried to obtain a white silicone particle.

When the obtained silicone particle was dispersed in water without using a surfactant and measured using an electric resistance method particle size distribution analyzer (Multisizer 3, manufactured by BECKMAN COULTER), the particle size distribution was equivalent to that of the above-described aqueous dispersion of the silicone particle, and the volume average particle size was 2.6 µm. When the silicone particle was observed with an electron microscope, it was observed that the silicone particle was a spherical silicone elastomer particle. When the silicone particle was subjected to NMR analysis in heavy water, -(CH₂CH₂O)- groups were detected, and it was determined that the silicone particle had a polydimethylsiloxane containing a polyoxyalkylene unit crosslinked to the surface of the silicone particle.

### [Example 2]

An aqueous dispersion of a silicone particle was obtained by the same method as in Example 1 except that a compound of the following formula (12) and having a kinematic viscosity of 90 mm²/s was used instead of the difunctional methacryl polysiloxane of the structural formula (10) used in Example 1.

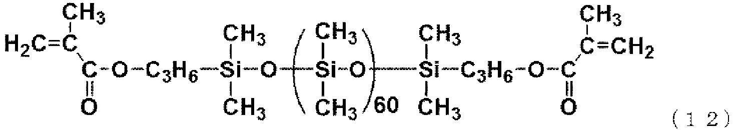

When the shape of the silicone particle in the obtained aqueous dispersion was observed with an optical microscope, the shape was spherical. When the volume average particle size was measured using an electric resistance method particle size distribution analyzer (Multisizer 3, manufactured by BECKMAN COULTER), the volume average particle size was 2.7 µm. The volume average particle size of the silicone particle obtained by the same purifying method as in Example 1 was 2.7 µm when dispersed in water without any surfactant. When the silicone particle was observed with an electron microscope, it was confirmed that the silicone particle was a spherical silicone elastomer particle. When the silicone particle was subjected to NMR analysis in heavy water, -(CH₂CH₂O)- groups were detected, and it was determined that the silicone particle had a polydimethylsiloxane containing a polyoxyalkylene unit crosslinked to the surface of the silicone particle.

### [Example 3]

An aqueous dispersion of a silicone particle was obtained by the same method as in Example 1 except that 0.27 g of 1,1,3,3-tetramethylbutyl hydroperoxide (PEROCTA H manufactured by NOF CORPORATION) (component (C), a radical polymerization initiator) was used instead of 0.33 g of cumene hydroperoxide (PERCUMYL H manufactured by NOF CORPORATION) (component (C), a radical polymerization initiator) used in Example 1.

When the shape of the silicone particle in the obtained aqueous dispersion was observed with an optical microscope, the shape was spherical. When the volume average particle size was measured using an electric resistance method particle size distribution analyzer (Multisizer 3, manufactured by BECKMAN COULTER), the volume average particle size was 2.8 µm. The volume average particle size of the silicone particle obtained by the same purifying method as in Example 1 was 2.8 µm when dispersed in water without any surfactant. When the silicone particle was observed with an electron microscope, it was confirmed that the silicone particle was a spherical silicone elastomer particle. When the silicone particle was subjected to NMR analysis in heavy water, -(CH₂CH₂O)- groups were detected, and it was determined that the silicone particle had a polydimethylsiloxane containing a polyoxyalkylene unit crosslinked to the surface of the silicone particle.

### [Example 4]

150 g of the difunctional methacryl polysiloxane (component (A)) shown by the above formula (10) and having a kinematic viscosity of 180 mm²/s and 0.33 g of cumene hydroperoxide (PERCUMYL H manufactured by NOF CORPORATION) (component (C), a radical polymerization initiator) were charged into a glass beaker having a capacity of 0.5 liters, and were stirred and dissolved by using a homomixer at 4000 rpm for 5 minutes. Next, 15 g of a difunctional methacryl polyalkylene glycol-modified polysiloxane (component (B)) shown by the following formula (13) and having a kinematic viscosity of 53,700 mm²/s and a cloud point of 50°C in 1% solution and 30 g of water were added thereto, and stirred using a homomixer at 7000 rpm. The obtained mixture was of an oil-in-water type, thickening was observed, and stirring was continued for further 15 minutes. Subsequently, 105 g of water was added for dilution while stirring at 2000 rpm. The mixture was passed through a homogenizer under the condition of a pressure of 100 MPa to obtain a homogeneous white emulsion.

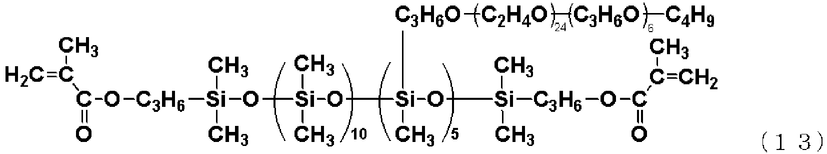

The temperature of this emulsion was adjusted to 20 to 25°C in a glass flask equipped with an agitator having an anchor paddle and having a capacity of 0.5 liters. Then, 0.012 g of ferrous sulfate heptahydrate (component (C), a reducing agent) and 0.12 g of ascorbic acid were added to the emulsion. By continuing stirring the emulsion at the same temperature for 8 hours, an aqueous dispersion of a silicone particle was obtained.

When the shape of the silicone particle in the obtained aqueous dispersion was observed with an optical microscope, the shape was spherical. When the volume average particle size was measured using an electric resistance method particle size distribution analyzer (Multisizer 3, manufactured by BECKMAN COULTER), the volume average particle size was 1.4 µm. The volume average particle size of the silicone particle obtained by the same purifying method as in Example 1 was 1.4 µm when dispersed in water without any surfactant. When the silicone particle was observed with an electron microscope, it was confirmed that the silicone particle was a spherical silicone elastomer particle. When the silicone particle was subjected to NMR analysis in heavy water, -(CH₂CH₂O)- groups and -(CH(CH₃)CH₂O)- groups were detected, and it was determined that the silicone particle had a polydimethylsiloxane containing a polyoxyalkylene unit crosslinked to the surface of the silicone particle.

### [Comparative Example 1]

An aqueous dispersion of a silicone particle was obtained by the same method as in Example 1 except that a compound shown by the following formula (14) and having a kinematic viscosity of 120 mm²/s and a cloud point of 65°C at 1% solution instead of the methacryl polyethylene glycol-modified polysiloxane (component (B)) of the structural formula (11) used in Example 1.

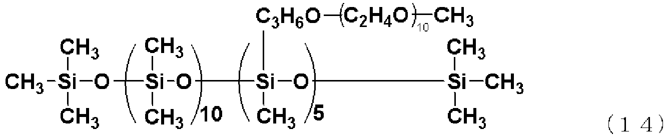

When the shape of the silicone particle in the obtained aqueous dispersion was observed with an optical microscope, the shape was spherical. When the volume average particle size was measured using an electric resistance method particle size distribution analyzer (Multisizer 3, manufactured by BECKMAN COULTER), the volume average particle size was 2.6 µm. However, although the silicone particle was obtained by the same purifying method as in Example 1, the silicone particle did not disperse in water on their own. Therefore, the volume average particle size was measured using a common surfactant, and the volume average particle size was 2.6 µm. When the silicone particle was observed with an electron microscope, it was confirmed that the silicone particle was a spherical silicone elastomer particle. However, when the silicone particle was subjected to NMR analysis in heavy water, no peak attributable to -(CH₂CH₂O)- groups was detected.

As shown above, in Comparative Example 1 where a polyoxyalkylene-modified silicone not having a radical polymerizable group is used for polymerization reaction instead of the component (B), an oxyalkylene group cannot be fixed in the surface of a silicone particle.

### [Comparative Example 2]

150 g of a difunctional methacryl polysiloxane (component (A)) shown by the following formula (10) and having a kinematic viscosity of 180 mm²/s, 15 g of a difunctional methacryl polyethylene glycol-modified polysiloxane (component (B))shown by the above formula (11) and having a kinematic viscosity of 160 mm²/s and a cloud point of 65°C at 1% solution, and 30 g of water were added, and were stirred using a homomixer at 7000 rpm. The obtained mixture was of an oil-in-water type, thickening was observed, and stirring was continued for further 15 minutes. Subsequently, 105 g of water was added for dilution while stirring at 2000 rpm. The mixture was passed through a homogenizer under the condition of a pressure of 100 MPa to obtain a homogeneous white emulsion.

258 g of the white emulsion was added with 42 g of a 1% aqueous solution of potassium persulfate, and stirred in a glass flask equipped with an agitator having an anchor paddle and having a capacity of 0.5 liters at 75°C for 3 hours, and emulsion was separated.

### [Comparative Example 3]

258 g of the white emulsion prepared in Comparative Example 2 was added with 42 g of a 1% aqueous solution of potassium persulfate, and stirred in a glass flask equipped with an agitator having an anchor paddle and having a capacity of 0.5 liters at 50°C for 3 hours, but polymerization does not proceed and silicone particle cannot be obtained.

In this way, in Comparative Examples 2 and 3 where a radical polymerization initiator is used solely instead of the component (C), the temperature needs to be higher than 50°C to proceed a polymerization reaction, and therefore, the emulcifying capacity of the component (B) having a low cloud point is decreased, and consequently it becomes impossible to proceed a desirable reaction.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A method for producing a silicone particle, the silicone particle comprising:
a dialkylsiloxane unit represented by the following general formula (1),
R⁴₂SiO_{2/2} (1)
wherein in the formula (1), R⁴s each independently represent a monovalent hydrocarbon group having 1 to 6 carbon atoms; and
a poly(oxyalkylene)methylsiloxane unit represented by the following general formula (2), 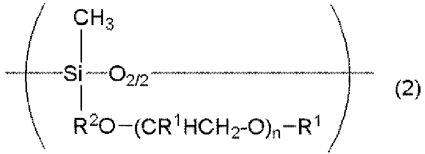 wherein in the formula (2), R¹s each independently represent a hydrogen atom or a monovalent hydrocarbon group having 1 to 6 carbon atoms, R²s each independently represent a divalent aliphatic group having 1 to 6 carbon atoms, and "n" is a number that satisfies 1 ≤ n ≤ 50,
wherein the silicone particle has an oxyalkylene group in a surface thereof,
the method comprising
polymerizing a radical polymerizable silicone composition containing the following components (A) to (C) in a state of being dispersed in water at a low temperature of 50°C or less:
(A) an organopolysiloxane having a radical polymerization reactive group shown in the following general formula (3): 100 parts by mass, 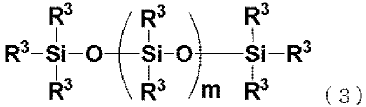 wherein in the formula (3), R³s each independently represent a monovalent hydrocarbon group having 1 to 6 carbon atoms or a group shown in the following general formula (4a) or (4b), provided that at least one group shown in the following formula (4a) or (4b) is contained in one molecule, and "m" is a number that satisfies 0 ≤ m ≤ 1,000, 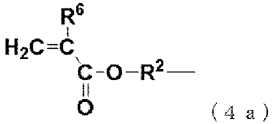 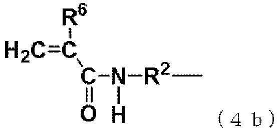 wherein in the formulae (4a) and (4b), R⁶ represents a hydrogen atom or a methyl group and R² represents a divalent aliphatic group having 1 to 6 carbon atoms;
(B) a polyoxyalkylene-modified silicone having a radical polymerizable group shown in the following general formula (5): 0.1 to 100 parts by mass, 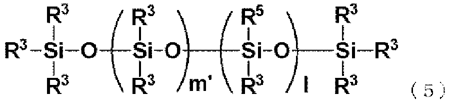 wherein in the formula (5), R³ is as defined above and at least one group shown in the following formula (4a) or (4b) are contained in one molecule, R⁵ represents a polyoxyalkylene group represented by the following general formula (7), "l" is a number that satisfies 1 ≤ l ≤ 300, and "m'" is a number that satisfies 1 ≤ m' ≤ 1,000, 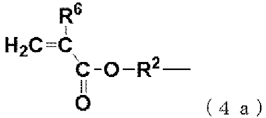 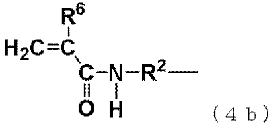 wherein in the formulae (4a) and (4b), R⁶ and R² are as defined above,
-R²O(CR¹HCH₂O)n-R¹ (7)
wherein in the formula (7), R¹, R², and "n" are as defined above; and
(C) a redox radical polymerization initiator : 0.1 to 5 parts by mass.

2. The method for producing a silicone particle according to claim 1, wherein an organopolysiloxane having a radical polymerization reactive group shown in the following general formula (8) is used as the component (A), 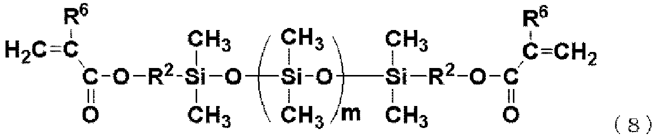 wherein in the formula (8), R² and R⁶ are as defined above, and "m" is a number that satisfies 0 ≤ m ≤ 1,000.

3. The method for producing a silicone particle according to claim 1 or 2, wherein a polyoxyalkylene-modified silicone having a radical polymerizable group shown in the following general formula (9) is used as the component (B), 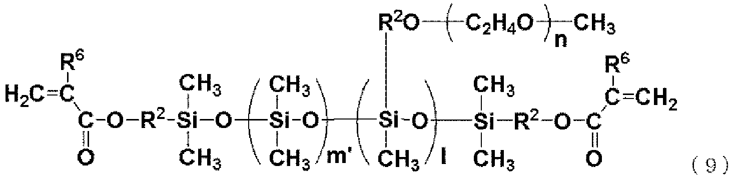 wherein in the formula (9), R² and R⁶ are as defined above, "l" is a number that satisfies 1 ≤ l ≤ 300, "m'" is a number that satisfies 1 ≤ m' ≤ 1,000, and "n" is a number that satisfies 1 ≤ n ≤ 50.

4. The method for producing a silicone particle according to any one of claims 1 to 3, wherein a volume average particle size of the silicone particle is in a range of 0.1 to 100 µm.

## Patentansprüche

1. Verfahren zur Herstellung eines Silikonpartikels, wobei das Silikonpartikel umfasst:
eine Dialkylsiloxaneinheit, die durch die folgende allgemeine Formel (1) repräsentiert wird:
R⁴₂SiO_{2/2} (1)
wobei in der Formel (1) die R⁴ jeweils unabhängig voneinander eine einwertige Kohlenwasserstoffgruppe mit 1 bis 6 Kohlenstoffatomen repräsentieren; und
eine Poly(oxyalkylen)methylsiloxan-Einheit, die durch die folgende allgemeine Formel (2) repräsentiert wird, 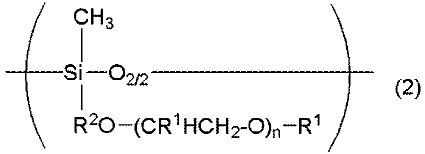 wobei in der Formel (2) die R¹ jeweils unabhängig voneinander ein Wasserstoffatom oder eine einwertige Kohlenwasserstoffgruppe mit 1 bis 6 Kohlenstoffatomen repräsentieren, die R² jeweils unabhängig voneinander eine zweiwertige aliphatische Gruppe mit 1 bis 6 Kohlenstoffatomen repräsentieren und "n" eine Zahl ist, die 1 ≤ n ≤ 50 erfüllt,
wobei das Silikonpartikel eine Oxyalkylengruppe in seiner Oberfläche aufweist,
wobei das Verfahren umfasst
Polymerisieren einer radikalisch polymerisierbaren Silikonzusammensetzung, die die folgenden Komponenten (A) bis (C) in einem in Wasser dispergierten Zustand bei einer niedrigen Temperatur von 50 °C oder weniger enthält:
(A) ein Organopolysiloxan mit einer reaktiven Gruppe für eine radikalische Polymerisation, dargestellt in der folgenden allgemeinen Formel (3): 100 Masseteile, 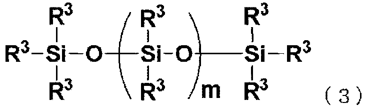 wobei in der Formel (3) die R³ jeweils unabhängig voneinander eine einwertige Kohlenwasserstoffgruppe mit 1 bis 6 Kohlenstoffatomen oder eine in der folgenden allgemeinen Formel (4a) oder (4b) dargestellte Gruppe repräsentiert, mit der Maßgabe, dass mindestens eine in der folgenden Formel (4a) oder (4b) dargestellte Gruppe in einem Molekül enthalten ist, und "m" eine Zahl ist, die 0 ≤ m ≤ 1.000 erfüllt, 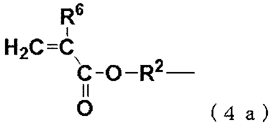 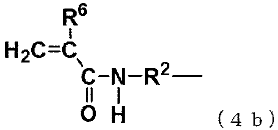 wobei in den Formeln (4a) und (4b) R⁶ ein Wasserstoffatom oder eine Methylgruppe repräsentiert und R² eine zweiwertige aliphatische Gruppe mit 1 bis 6 Kohlenstoffatomen repräsentiert;
(B) ein polyoxyalkylenmodifiziertes Silikon mit einer radikalisch polymerisierbaren Gruppe, dargestellt in der folgenden allgemeinen Formel (5): 0,1 bis 100 Masseteile, 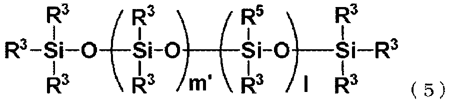 wobei in der Formel (5) R³ wie oben definiert ist und mindestens eine in der folgenden Formel (4a) oder (4b) gezeigte Gruppe in einem Molekül enthalten ist, R⁵ eine Polyoxyalkylengruppe repräsentiert, die durch die folgende allgemeine Formel (7) dargestellt wird, "l" eine Zahl ist, die 1 ≤ l ≤ 300 erfüllt, und "m'" eine Zahl ist, die 1 ≤ m' ≤ 1.000 erfüllt, 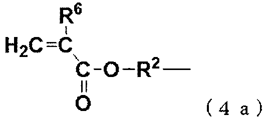 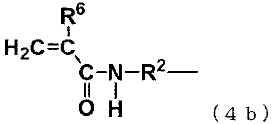 wobei in den Formeln (4a) und (4b) R⁶ und R² wie oben definiert sind,
-R²O(CR¹HCH₂O)n-R¹ (7)
wobei in der Formel (7) R¹, R² und "n" wie oben definiert sind; und
(C) einen Redox-Radikalpolymerisationsinitiator: 0,1 bis 5 Masseteile.

2. Verfahren zur Herstellung eines Silikonpartikels gemäß Anspruch 1, wobei ein Organopolysiloxan mit einer reaktiven Gruppe für eine radikalische Polymerisation, dargestellt in der folgenden allgemeinen Formel (8), als Komponente (A) verwendet wird, 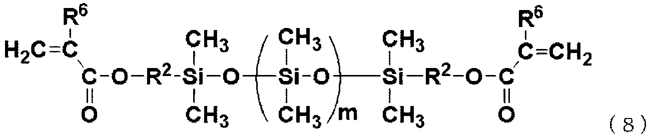 wobei in der Formel (8) R² und R⁶ wie oben definiert sind und "m" eine Zahl ist, die 0 ≤ m ≤ 1.000 erfüllt.

3. Verfahren zur Herstellung eines Silikonpartikels gemäß Anspruch 1 oder 2, wobei ein polyoxyalkylenmodifiziertes Silikon mit einer radikalisch polymerisierbaren Gruppe, dargestellt in der folgenden allgemeinen Formel (9), als Komponente (B) verwendet wird, 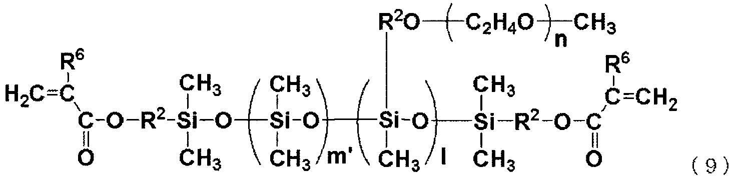
wobei in der Formel (9) R² und R⁶ wie oben definiert
sind, "l" eine Zahl ist, die 1 ≤ l ≤ 300 erfüllt,
"m'" eine Zahl ist, die 1 ≤ m' ≤ 1.000 erfüllt, und
"n" eine Zahl ist, die 1 ≤ n ≤ 50 erfüllt.

4. Verfahren zur Herstellung eines Silikonpartikels gemäß einem der Ansprüche 1 bis 3, wobei eine volumenmittlere Partikelgröße des Silikonpartikels in einem Bereich von 0,1 bis 100 µm liegt.

## Revendications

1. Procédé de production d'une particule de silicone, ladite particule de silicone comprenant:
un motif dialkylsiloxane représenté par la formule générale suivante (1),
R⁴₂SiO_{2/2} (1)
dans lequel, dans la formule (1), les fractions R⁴ représentent chacune indépendamment un groupe hydrocarbure monovalent comportant de 1 à 6 atomes de carbone; et
un motif poly(oxyalkylène)méthylsiloxane représenté par la formule générale suivante (2), 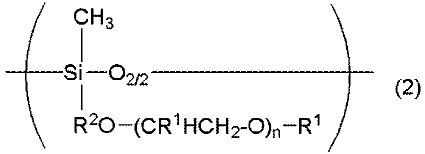 dans lequel, dans la formule (2), les fractions R¹ représentent chacun, indépendamment, un atome d'hydrogène ou un groupe hydrocarbure monovalent comportant de 1 à 6 atomes de carbone, les R² représentent chacune indépendamment un groupe aliphatique divalent comportant de 1 à 6 atomes de carbone, et « n » est un nombre tel que 1 ≤ n ≤ 50,
dans laquelle la particule de silicone comporte un groupe oxyalkylène à sa surface,
le procédé comprenant
la polymérisation d'une composition de silicone polymérisable par voie radicalaire contenant les composants (A) à (C) suivants, sous forme dispersée dans l'eau, à une basse température inférieure ou égale à 50°C:
(A) un organopolysiloxane comportant un groupe réactif de polymérisation radicalaire représenté par la formule générale suivante (3): 100 parties en masse, 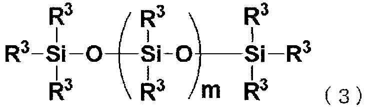 dans lequel, dans la formule (3), les fractions R³ représentent chacune indépendamment un groupe hydrocarbure monovalent comportant 1 à 6 atomes de carbone ou un groupe représenté par la formule générale suivante (4a) ou (4b), à condition qu'au moins un groupe représenté par la formule suivante (4a) ou (4b) soit présent dans une molécule, et « m » est un nombre tel que 0 ≤ m ≤ 1 000, 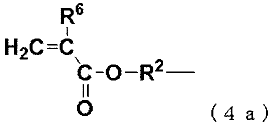 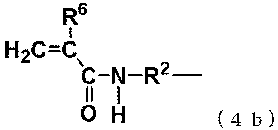 dans lequel, dans les formules (4a) et (4b), la fraction R⁶ représente un atome d'hydrogène ou un groupe méthyle et la fraction R² représente un groupe aliphatique divalent comportant de 1 à 6 atomes de carbone ;
(B) une silicone modifiée par un polyoxyalkylène comportant un groupe polymérisable par voie radicalaire représenté par la formule générale suivante (5): 0,1 à 100 parties en masse, 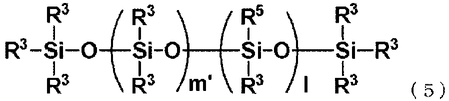 dans lequel, dans la formule (5), la fraction R³ est telle que définie ci-dessus et au moins un groupe représenté par la formule suivante (4a) ou (4b) est présent dans une molécule, la fraction R⁵ représente un groupe polyoxyalkylène représenté par la formule générale suivante (7), « l » est un nombre tel que 1 ≤ l≤ 300, et « m' » est un nombre tel que 1 ≤ m' ≤ 1 000, 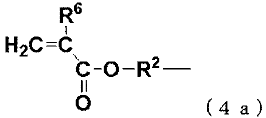 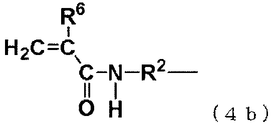 dans lequel, dans les formules (4a) et (4b), les fractions R⁶ et R² sont telles que définies ci-dessus,
--R²O(CR¹HCH₂O)n-R¹ (7)
dans laquelle, dans la formule (7), les fractions R¹, R² et « n » sont telles que définies ci-dessus; et
(C) un initiateur de polymérisation radicalaire redox: 0,1 à 5 parties en masse.

2. Procédé de production d'une particule de silicone selon la revendication 1, dans lequel on utilise, en tant que composant (A), un organopolysiloxane comportant un groupe réactif de polymérisation radicalaire représenté par la formule générale suivante (8): 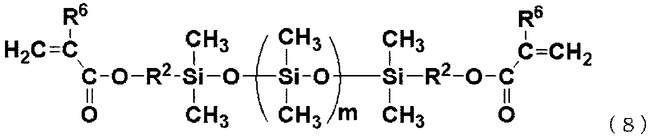 dans lequel, dans la formule (8), les fractions R² et R⁶ sont telles que définies ci-dessus, et « m » est un nombre tel que 0 ≤ m ≤ 1 000.

3. Procédé de production d'une particule de silicone selon la revendication 1 ou 2, dans lequel on utilise comme composant (B) une silicone modifiée par un polyoxyalkylène comportant un groupe polymérisable par voie radicalaire représenté par la formule générale suivante (9): 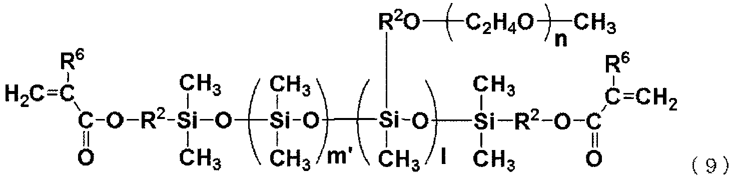 dans lequel, dans la formule (9), les fractions R² et R⁶ sont telles que définies ci-dessus, « l » est un nombre tel que 1 ≤ l ≤ 300, « m' » est un nombre tel que 1 ≤ m' ≤ 1 000, et « n » est un nombre tel que 1 ≤ n ≤ 50.

4. Procédé de production d'une particule de silicone selon l'une quelconque des revendications 1 à 3, dans lequel la taille moyenne en volume de la particule de silicone se situe dans une plage allant de 0,1 à 100 µm.
